# EUROPEAN PATENT SPECIFICATION

(11) **EP 3 746 646 B1**
(45) Date of publication and mention of the grant of the patent: **29.03.2023**
(21) Application number: 19787879.6
(22) Date of filing: 02.01.2019
(51) Int. Cl.: F01P 7/16, F01P 11/02, G05D 23/13

(54) **THERMOSTAT VALVE ASSEMBLY**
THERMOSTATVENTILBAUGRUPPE
ENSEMBLE SOUPAPE THERMOSTAT

(30) Priority: 02.02.2018 TR 201801512
(43) Date of publication of application: 09.12.2020
(73) Proprietor: KIRPART OTOMOTIV PARÇALARI SANAYI VE TICARET A.S., 16800 Bursa (TR)
(72) Inventor: KANBUR, Hikmet, 16800 Bursa (TR)
(74) Representative: Demirkiran, Hasan
(86) International application number: PCT/TR2019/050003
(87) International publication number: WO 2019/203758

(56) References cited:
- EP-A2- 0 432 103
- WO-A1-2010/012950
- WO-A1-2012/064293
- WO-A1-2018/093342
- GB-A- 870 363
- GB-A- 977 658
- GB-A- 2 194 620
- US-A- 4 193 542
- US-A- 4 428 527

## Description

### Technical Field

The invention relates to a thermostat assembly with an air venting valve mechanism which allows a ball to be locked within a ball nest hole formed on side wall of valve structure by fastening operation of thermo-element to the valve structure.

### Prior Art

Engine cooling system executes a crucial task for engine efficiency by proving proper temperature control of engine coolant. Here, thermostat assembly within the cooling system determines cooling level by adjusting coolant flow ratio between radiator inlet and bypass inlet according to actual engine coolant temperature value. Engine coolant temperature is sensed by a thermo-element located inside the thermostat assembly. A valve structure mounted on the thermo-element changes position with the forward and backward motion of the thermo-element. Thus, the changing valve position determines coolant flow direction/directions by allowing thermostat assembly to change position fully closed position to partially open and then fully open position.

For operational functionality of thermostat assembly, consequently, functionality of cooling system, air venting valve structure executes a crucial task by allowing air pockets to pass through the thermostat assembly. In art, there are so many solutions used for formation of air venting valve structure on housing part or valve structure of thermostat assembly by using ball or jiggle pin.

The patent document US4193542 mentions a thermostatic valve formed by joining two parts of housing by means of a clamp, a snap fastener or bayonet fastener, therefore, without any tools and a venting valve formed during mounting of these two parts. A float element (ball) is inserted within the groove formed on one of these two parts then, the ball structure is locked here by mounting these two parts together. Despite of that this method could be actualized with connection operations without any tools, these connection operations require complex preparations.

As a result, there is any invention about an air venting valve mechanism which, formed by fastening of termo-element within valve structure during mounting operation of thermostat assembly. So, the solution of the present invention is required.

### Objectives and Short Description of the Invention

The aim of the present invention is to present an air venting valve structure mechanism by fastening of termo-element within the valve structure during mounting operation of thermostat assembly.

Another aim of the present thermostat assembly is to provide easier and cheaper production process than the conventional thermostat assemblies.

### Description of the Figures

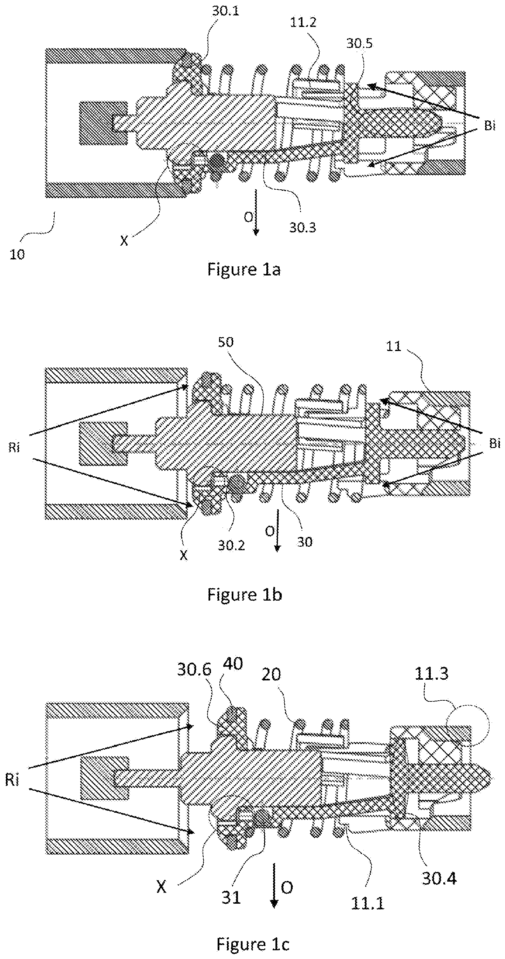

In figure 1a, a cross-sectional view of the present thermostat assembly at fully closed thermostat position is given. At this fully closed thermostat position, primary valve element of valve structure closes radiator inlet passage. So, there is just coolant flow from bypass inlet (coolant coming from engine outlet) to outlet through bypass circuitry. The coolant flow directions from bypass inlet to outlet through the present thermostat assembly at fully closed position are shown on this figure. Also, thanks to an air discharge path from radiator inlet to outlet, at this fully closed thermostat position, air pockets accumulated radiator inlet is allowed to pass outlet through thermostat assembly. Mentioned air discharge path is shown with 'X' reference. The conical hole shape of ball nest shown in this figure prevents the ball to pass out.

In figure 1b, a cross-sectional view of the present thermostat assembly at partially open thermostat position is given. At this partially open thermostat position, primary valve element position allows coolant to flow from radiator inlet to outlet. So, there are coolant flows from both bypass inlet and radiator inlet to outlet, by allowing coolant circulation through bypass circuitry and heat exchange circuitry, respectively. The coolant flow directions from both bypass inlet and radiator inlet to outlet through the present thermostat assembly at partially open position are shown on this figure.

In figure 1c, a cross-sectional view of the present thermostat assembly at full open thermostat position is given. At this fully open thermostat position, secondary valve element of valve structure closes bypass inlet passage. So, there is just coolant flow from radiator inlet (coolant coming from radiator channels) to outlet through heat exchange circuitry. The coolant flow directions from radiator inlet to outlet through the present thermostat assembly at fully open position are shown on this figure.

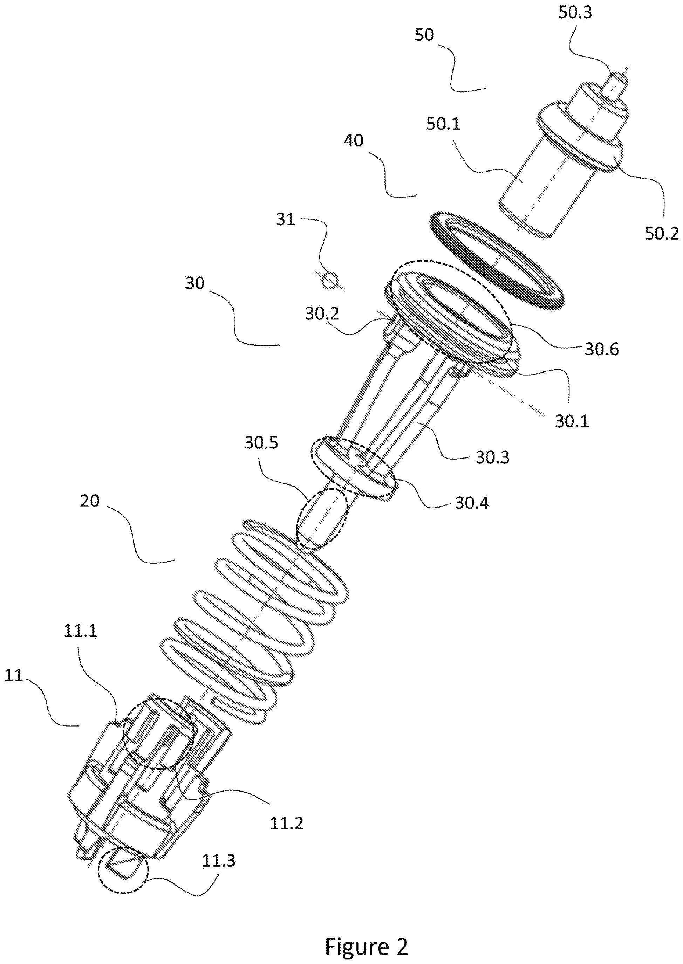

In figure 2, an exploded perspective view of the present thermostat assembly is given. As seen from this figure, the present thermostat assembly comprises a mounting frame, a spring, a valve structure, a ball, a sealing element and a thermo-actuator. Mentioned valve structure has two valve elements: primary valve elements and secondary valve elements. Secondary valve element prevents coolant flow through bypass circuitry at fully open thermostat position while the primary valve element prevents coolant flow through the heat exchange circuitry at fully closed thermostat position.

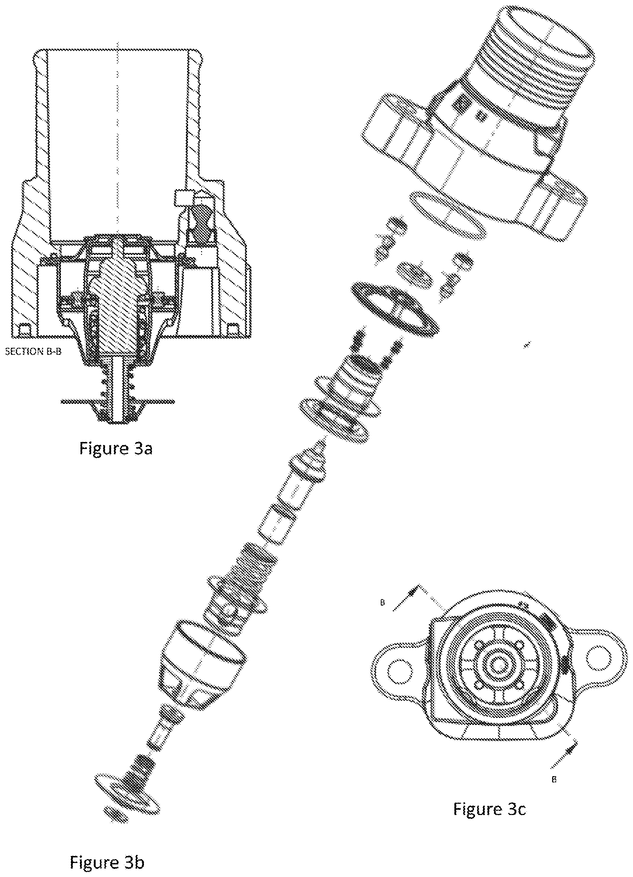

Figure 3a, 3b and 3c show respectively a cross-sectional view, an exploded perspective view and top-sectional view of a state of the art thermostat assembly requiring conventional jiggle pin and an additional part for air venting valve mechanism solution.

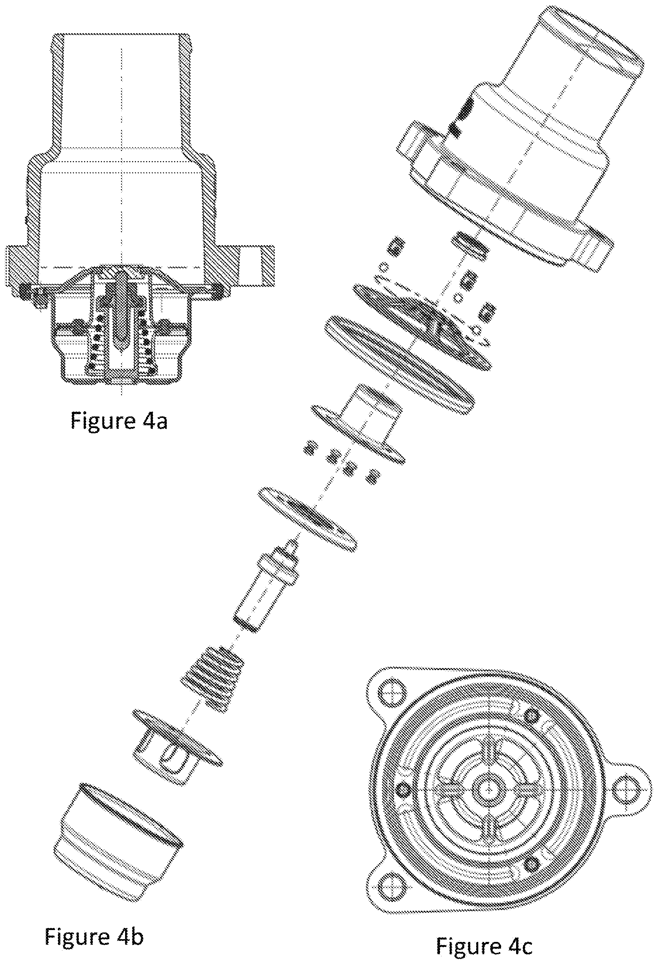

Figure 4a, 4b and 4c show respectively a cross-sectional view, an exploded perspective view and top-sectional view of another state of the art thermostat assembly requiring a ball and an additional part for air venting valve mechanism solution.

### Reference Numerals

- 10.: Thermostat assembly
- 11.: Mounting Frame
- 11.1.: Spring stopper
- 11.2.: Frame claws
- 11.3.: Guiding element
- 20.: Spring
- 30.: Valve structure
- 30.1.: Sealing groove
- 30.2.: Ball nest
- 30.3.: Valve arms
- 30.4.: Secondary valve element
- 30.5.: Centering shaft
- 30.6.: Primary valve element
- 31.: Ball
- 40.: Sealing element
- 50.: Thermo-actuator
- 50.1.: Heat sensitive part
- 50.2.: Sleeve
- 50.3.: Piston
- O.: Outlet
- Ri.: Radiator inlet
- Bi.: Bypass inlet
- X.: Air discharge path

### Detailed Description of the Invention

This invention relates to an air venting valve formation method by fastening of thermo-actuator (50) within valve structure (30) part and a thermostat assembly (10) therefor.

Air pockets trapped within the cooling system could damage all engine system. The purpose of the air venting valve on the thermostat assembly (10) is to allow air trapped within the engine cooling system to pass through thermostat assembly (10) and so to eliminate it.

In engine cooling system, different venting valve are used: the venting valve structures formed on the top radiator channels, on the thermostat housing or on valve element of valve structure (30). The venting valve on the thermostat housing or on the valve element of the valve structure (30) aims to remove the air pocket by allowing it to pass through the thermostat assembly (10) while the venting valve formed on the top of radiator channels aims to remove the air pocket within the radiator channels out of cooling system.

The present thermostat assembly (10), providing air venting valve mechanism on side wall of valve structure (30), comprises a mounting frame (11) which has spring stopper (11.1) structure, frame claw (11.2) and guiding element (11.3) structures, a spring (20), a valve structure (30) which has primary valve element (30.6), secondary valve element (30.4), valve arms (30.3), sealing groove (30.1), centering shaft (30.5) and ball nest (30.2) structures, a ball (31), a sealing element (40) and a thermo-actuator (50).

Explanation of the present invention via the figures from 1 and 4 will be useful for better understanding of the present invention.

Valve position, consequently positions of valve elements determine the coolant flow directions within thermostat housing according to engine coolant temperature. If engine coolant temperature is cold enough for engine work conditions, the primary valve element (30.6) continues to prevent coolant flow from radiator inlet (Ri) to outlet (O) through heat exchange circuitry by closing the radiator inlet (Ri) window. So, there is just coolant flow from bypass inlet (Bi) to outlet (O) through bypass circuitry (including engine channels, thermostat assembly (10), circulation pump) at this fully closed thermostat position. The cross-sectional view of the present invention at fully closed thermostat position is given in figure 1a. When the engine coolant temperature reaches first critical temperature value, the valve structure (30), consequently, both primary valve element (30.6) and secondary valve element (30.4) move forward towards bypass inlet (Bi). As a result of this forward motion of valve structure (30), the coolant within radiator channels starts to flow from radiator inlet (Ri) to outlet (O) through heat exchange circuitry while the engine coolant flow from bypass inlet (Bi) to outlet (O) through the bypass circuitry decreases. This means, at this partially open thermostat position, there are coolant flows from both bypass inlet (Bi) and radiator inlet (Ri) to outlet (O) through both bypass circuitry and heat exchange circuitry, respectively. The cross-sectional view of the present invention at partially open thermostat position is given in figure 1b. When the engine coolant temperature reaches second critical temperature value, the valve structure (30), consequently both primary valve element (30.6) and secondary valve element (30.4) move further towards bypass inlet (Bi). As a result of this further motion of valve structure (30) the secondary valve element (30.4) prevents the coolant flow from bypass inlet (Bi) to outlet (O) through the bypass circuitry by closing bypass inlet (Bi) window. This means, at this fully open thermostat position, there is just coolant flow from radiator inlet (Ri) to outlet (O) through heat exchange circuitry. The cross-sectional view of the present invention at fully open thermostat position is given in figure 1c.

As understood from the exploded perspective view of the present invention in figure 2, mentioned sealing element (40) is inserted on sealing groove (30.1) structure of mentioned primary valve element (30.6). Said sealing element (40) prevents coolant leakages from radiator inlet (Ri) to thermostat interior space at fully closed thermostat position by merging said primary valve element (30.6) with radiator inlet (Ri) window.

Thermo-actuator (50) is mounted within valve structure (30) with fastening method. Since mentioned valve arms (30.3) of valve structure (30) extend between primary valve element (30.6) and secondary valve element (30.4) with gradually decreasing distance to each other, they also assist the fastening operation of thermo-actuator (50) within interior space of valve structure (30). As result of this fastening operation, mentioned ball (31) which is inserted within a ball nest (30.2) hole on one of mentioned valve arms (30.3) before this mounting operation is trapped therein by forming an air venting valve mechanism for the present thermostat assembly (10). Mentioned ball nest (30.2) has a truncated conical hole shape with truncated end diameter as preventing said ball to pass out. This truncated open end provides connection between said ball nest (30.2) and outlet (O) while other one provides connection between ball nest (30.2) and radiator inlet (Ri) via an air discharge path (X) formed therein. Thanks to this air venting mechanism extending from radiator inlet (Ri) to outlet (O), air pockets accumulated within radiator channels is allowed to pass through thermostat assembly (10) at fully closed thermostat position.

Mentioned centering shaft (30.5) which is formed towards guiding hole of the mounting frame (11) as an extension of secondary valve element (30.4) prevents collapse of valve structure (30) during coolant cycling by guiding valve structure through this guiding hole.

Mentioned spring (20) is inserted between primary valve element (30.6) of valve structure (30) and a spring stopper (11.1) structure of mounting frame (11). Since mentioned spring stopper (11.1) structure restricts further motion of said spring (20) toward bypass inlet (Bi), spring (20) could store motion energy of valve structure (30) as potential energy. This potential energy stored within spring (20) assists backward motion of valve structure (30) during passing prosses from fully open thermostat position to fully closed thermostat position. Said spring stopper (11.1) structure on mounting frame is designed with softer geometry having gradually increased slope toward spring (20) without any sharp protrusion to allow coolant to flow softer from bypass inlet (Bi) to outlet (O) through bypass circuitry and also to use less material.

Also, there are frame claw (11.2) structures on mounting frame (11) to provide mounting operation irreversibly between mounting frame (11) and valve structure (30). These frame claw (11.2) structures formed on mounting frame (11) have a structure which exhibits a flexible property at first mounting by stretching backward then comes back same position when both the secondary valve element (30.4) and valve arms (30.3) are located within mounting frame (11).

Lastly, guiding element (11.3) structures formed on mounting frame (11) prevent collapse of valve structure (30) during coolant cycling by guiding said centering shaft (30.5) throughout.

Figure 3a, 3b and 3c show respectively a cross-sectional view, an exploded perspective view and a top sectional view of a thermostat assembly (10) used in art. This thermostat assembly (10) provided a solution comprising jiggle pin for air venting valve mechanism. However, this solution requires additional part and two operations for mounting of jiggle pin. Also, due to jiggle pin, production of this thermostat assembly (10) costs much more than the thermostat assemblies (10) having air venting mechanism with ball (31).

Figure 4a, 4b and 4c show respectively a cross-sectional view, an exploded perspective view and top sectional view of another thermostat assembly (10) used in art. This thermostat assembly (10) provided a solution for air venting valve mechanism by using ball (31). However, this solution also requires additional part and two operations for mounting of ball (31).

Briefly, the present air venting valve formation method and the present thermostat assembly (10) therefor provide advantage of easy production requiring just one operation for mounting of ball (31). Also, additional part is not required for this present air venting valve mechanism solution. Thanks to this production method which is not require any additional part and allows the ball (31) to be mounted just with one operation (fastening of thermo-actuator (50) within valve structure (30)), it provides cost saving.

## Claims

1. A thermostat assembly (10) comprising a mounting frame (11), a spring (20), a valve structure (30), a ball (31), a sealing element (40) and a thermo-actuator (50) and, **characterized by**; in order to allow air pockets accumulated within radiator channels to pass through thermostat assembly (10) at fully closed thermostat position; mentioned thermostat assembly (10) comprises
an air venting mechanism including
- a ball nest (30.2) hole formed on side wall of mentioned valve structure (30), in which mentioned ball (31) is locked within mentioned ball nest (30.2) hole by fastening of thermo-actuator (50) within the valve structure (30)
- an air discharge path (X) formed on inner top side wall of said valve structure (30) for completing connection between said ball nest (30.2) hole and radiator channels at fully closed thermostat position.

2. A thermostat assembly (10) according to claim 1, and **characterized by**; to prevent ball (31) to go out of ball nest (30.2) hole, ball nest (30.2) hole has a conical hole shaped structure with two truncated open ends.

3. A thermostat assembly (10) according to claim 1 or 2, wherein to allow air pockets accumulated within radiator channels at fully closed position to pass through on, one of mentioned open ends provides connection between said ball nest (30.2) and outlet (O) while other one provides connection between radiator channel and the ball nest (30.2).

4. A thermostat assembly (10) according to claim 1, and **characterized by**; to prevent coolant flow from radiator inlet (Ri) to outlet (O) at fully closed thermostat position and coolant flow from bypass inlet (Bi) to outlet (O) at fully open thermostat position, said valve structure (30) has two valve elements respectively; a primary valve element (30.6) and a secondary valve element (30.4).

5. A thermostat assembly (10) according to claim 1 or 4, and **characterized by**; to prevent coolant leakages from radiator inlet (Ri) to thermostat interior space at fully closed thermostat position by merging mentioned primary valve element (30.6) with radiator inlet (Ri) window, valve structure (30) has a sealing groove (30.1) structure formed through said primary valve element (30.6) for mentioned sealing element (40) to sit on.

6. A thermostat assembly (10) according to claim 5, and **characterized by**; to assist mentioned thermo-actuator (50) to be fastened within valve structure (30), valve structure (30) has valve arms (30.3) which extending between primary valve element (30.6) and secondary valve element (30.4) have gradually decreasing distance to each other towards secondary valve element (30.4).

7. A thermostat assembly (10) according to claim 1 or 6, and **characterized by**; to prevent collapse of valve structure (30) during coolant cycling by guiding the valve structure (30) within mounting frame (11), valve structure (30) has a centering shaft (30.5) extending towards guiding hole of the mounting frame (11) as an extension of secondary valve element (30.4).

8. A thermostat assembly (10) according to claim 7, wherein to store motion energy of valve structure (30) as potential energy for assisting backward motion of valve structure (30) during the passing process from fully open thermostat position to fully closed thermostat position, mentioned spring (20) is inserted between primary valve element (30.6) of valve structure (30) and mounting frame (11).

9. A thermostat assembly (10) according to claim 8, and **characterized by**; to prevent further motion of spring (20) toward bypass inlet (Bi) and so to allow said spring (20) to store potential energy, mounting frame (11) has a spring stopper (11.1) structure on.

10. A thermostat assembly (10) according to claim 9, and **characterized by**; to allow coolant to flow softer (without sudden pressure drop) from bypass inlet (Bi) to outlet (O) through bypass circuitry and also to use less material, mentioned spring stopper (11.1) structure on mounting frame (11) has a geometry having gradually increased slope towards spring (20) without any sharp protrusion.

11. A thermostat assembly (10) according to claim 1 or 10, and **characterized by**; to provide mounting operation irreversibly between mounting frame (11) and valve structure (30), mounting frame (11) has inner frame claw (11.2) structures which exhibit flexible property at first mounting by stretching backward then come back same position when the secondary valve element (30.4) and valve arms (30.3) are located within mounting frame (11).

12. A thermostat assembly (10) according to claim 1 or 8, and **characterized by**; to prevent collapse of valve structure (30) during coolant cycling by guiding mentioned centering shaft (30.5) throughout, mounting frame (11) has guiding element (11.3) structures.

## Patentansprüche

1. Verfahren eine Thermostatanordnung (10), umfassend einen Montagerahmen (11), eine Feder (20), eine Ventilstruktur (30), eine Kugel (31), ein Dichtungselement (40) und einen Thermo- Auslöser (50) und , wird **dadurch gekennzeichnet, dass** Lufteinschlüsse, die sich in Kühlerkanälen angesammelt haben, durch die Thermostatanordnung (10) bei vollständig geschlossener Thermostatposition hindurchtreten zu ermöglichen; erwähnte Thermostatanordnung (10) umfasst
einen Entlüftungsmechanismus einschließlich
- an einer Seitenwand der erwähnten Ventilstruktur (30) geformte Kugelaufnahmeloch (30.2), in dem die erwähnte Kugel (31) innerhalb des erwähnten Kugelaufnahmelochs (30.2) durch Befestigung des Thermoaktuators (50) innerhalb der Ventilstruktur verriegelt ist (30)
- um die Verbindung zwischen dem Loch des Kugellagers (30.2) und den Kühlerkanälen bei vollständig geschlossener Thermostatposition zu vervollständigen einen Luftauslassweg (X), der an der inneren oberen Seitenwand der Ventilstruktur (30) geformt ist.

2. Eine Thermostatanordnung (10) nach Anspruch 1 wird **dadurch gekennzeichnet, dass** um zu verhindern, dass die Kugel (31) aus dem Loch der Kugelaufnahme (30.2) heraustritt die Aufnahme der Kugel (30.2) eine konische lochförmige Struktur mit zwei abgeschnittenen offenen Enden hat.

3. Eine Thermostatanordnung (10) nach Anspruch 1 oder 2 wird **dadurch gekennzeichnet, dass** um Lufteinschlüsse, die sich in Kühlerkanälen bei vollständig geschlossener Position angesammelt haben passieren zu lassen, eines der erwähnten offenen Enden eine Verbindung zwischen dem Kugelaufnahme (30.2) und dem Auslass (O) und der andere die Verbindung zwischen dem Kühlerkanal und dem Kugelaufnahme (30.2) ermöglicht

4. Eine Thermostatanordnung (10) nach Anspruch 1 wird **dadurch gekennzeichnet, dass** bei vollständig geschlossener Thermostatposition um Kühlmittelfluss vom Kühlereinlass (Ri) zum Auslass (O) und vom Bypass-Einlass (Bi) zum Auslass (O) bei vollständig geöffneter Thermostatposition zu verhindern, die bezeichnete Ventilstruktur (30) zwei Ventilelemente bzw. ein Primärventilelement (30.6) und ein Sekundärventilelement (30.4) aufweist.

5. Eine Thermostatanordnung (10) nach Anspruch 1 oder 4 wird **dadurch gekennzeichnet, dass** um Kühlmittelleckagen vom Kühlereinlass (Ri) zum Thermostatinnenraum bei vollständig geschlossener Thermostatposition durch Zusammenführen des erwähnten primären Ventilelements (30.6) mit dem Kühlereinlassfenster (Ri) zu verhindern, die Ventilstruktur (30) eine Dichtungsnutstruktur (30.1) hat, dies damit das erwähnte Dichtungselement (40) darauf sitzt durch das primäre Ventilelement (30.6) gebildet ist.

6. Eine Thermostatanordnung (10) nach Anspruch 5 wird **dadurch gekennzeichnet, dass** um die Befestigung des erwähnten Thermoaktuators (50) innerhalb der Ventilstruktur (30) zu unterstützen die Ventilstruktur (30) die sich zwischen dem primären Ventilelement (30.6) und dem sekundären Ventilelement (30.4) erstreckende Ventilarme (30.3) und einen allmählich abnehmenden Abstand zum Sekundärventilelement (30.4) zueinander haben.

7. Eine Thermostatanordnung (10) nach Anspruch 1 oder 6 wird **dadurch gekennzeichnet, dass** um ein Kollabieren der Ventilstruktur (30) während des Kühlmittelkreislaufs zu verhindern, die Ventilstruktur (30) innerhalb des Montagerahmens (11) geführt wird und die Ventilstruktur (30) einen Zentrierachse (30.5) hat, die sich als Verlängerung des sekundären Ventilelements (30.4) in Richtung des Führungslochs des Montagerahmens (11) erstreckt.

8. Eine Thermostatanordnung (10) nach Anspruch 7 wird **dadurch gekennzeichnet, dass** die Bewegungsenergie der Ventilstruktur (30) als potentielle Energie zum Unterstützen der Rückwärtsbewegung der Ventilstruktur (30) beim Übergangsvorgang von der vollständig geöffneten Thermostatposition zu dem vollständig geschlossenen Thermostatposition gespeichert wird, und erwähnte Feder (20) zwischen dem Primärventilelement (30.6) des Ventilaufbaus (30) und dem Montagerahmen (11) eingefügt ist.

9. Eine Thermostatanordnung (10) nach Anspruch 8 wird **dadurch gekennzeichnet, dass** um eine weitere Bewegung der Feder (20) in Richtung Bypass-Einlass (Bi) zu verhindern und somit für dem Feder (20) potenzielle Energie zu speichern zu ermöglichen, der Montagerahmen (11) eine Federstoppstruktur (11.1) aufweist.

10. Eine Thermostatanordnung (10) nach Anspruch 9 wird **dadurch gekennzeichnet, dass** damit das Kühlmittel sachter (ohne plötzlichen Druckabfall) vom Bypass-Einlass (Bi) zum Auslass (O) durch die Bypass-Schaltung fließen kann und auch um weniger Material zu verwenden die erwähnte Struktur des Federstopps (11.1) am Montagerahmen (11) eine Geometrie mit allmählich zunehmende Neigung zum Feder (20) ohne scharfen Vorsprung hat.

11. Eine Thermostatanordnung (10) nach Anspruch 1 oder 10 wird **dadurch gekennzeichnet, dass** um einen irreversiblen Montagevorgang zwischen dem Montagerahmen (11) und der Ventilstruktur (30) bereitzustellen, der Montagerahmen (11) innere Rahmenklauenstrukturen (11.2) hat, die bei der ersten Montage eine flexible Eigenschaft aufweisen, indem sie sich nach hinten strecken und dann in dieselbe Position zurückkehren, wenn das sekundäre Ventil Element (30.4) und Ventilarme (30.3) sich innerhalb des Montagerahmens (11) befinden.

12. Eine Thermostatanordnung (10) nach Anspruch 1 oder 8 wird **dadurch gekennzeichnet, dass** um ein Kollabieren der Ventilstruktur (30) während des Kühlmittelumlaufs durch durchgehendes Führen der erwähnten Zentrierachse (30.5) zu verhindern, der Montagerahmen (11) Führungselementstrukturen (11.3) aufweisen.

## Revendications

1. Un ensemble de thermostat (10) comprenant un cadre de montage (11), un ressort (20), une structure de vanne (30), une bille (31), un élément d'étanchéité (40) et un thermo-actionneur (50) et, **caractérisé par**; afin de permettre aux poches d'air accumulées dans les canaux de radiateur de passer à travers l'ensemble de thermostat (10) à la position de thermostat entièrement fermée ; l'ensemble de thermostat (10) mentionné comprend
un mécanisme d'évacuation d'air comprenant
- un trou de nid de bille (30.2) formé sur la paroi latérale de la structure de vanne (30) mentionnée, dans lequel la bille (31) mentionnée est verrouillée dans le trou de nid de bille (30.2) mentionné par la fixation d'un thermo-actionneur (50) dans la structure de vanne (30)
- un trajet d'évacuation d'air (X) formé sur la paroi latérale supérieure interne de ladite structure de vanne (30) pour compléter la connexion entre ledit trou de nid de bille (30.2) et les canaux de radiateur à la position entièrement fermée du thermostat.

2. Un ensemble de thermostat (10) selon la revendication 1, et **caractérisé par** ; afin d'empêcher la bille (31) de sortir du trou du nid de bille (30.2), le trou du nid de bille (30.2) a une structure en forme de trou conique avec deux extrémités ouvertes tronquées.

3. Un ensemble de thermostat (10) selon la revendication 1 ou 2, dans lequel pour permettre aux poches d'air accumulées à l'intérieur des canaux de radiateur en position entièrement fermée de passer, l'une des extrémités ouvertes mentionnées fournit une connexion entre ledit trou du nid de bille (30.2) et la sortie (O) tandis que l'autre assure la connexion entre le canal du radiateur et le trou du nid de bille (30.2).

4. Un ensemble de thermostat (10) selon la revendication 1, et **caractérisé par** ; afin d'empêcher le flux de l'agent de refroidissement de l'entrée du radiateur (Ri) vers la sortie (O) en position entièrement fermée du thermostat et le flux de l'agent de refroidissement de l'entrée de dérivation (Bi) vers la sortie (O) en position entièrement ouverte du thermostat, ladite structure de vanne (30) a deux éléments de vanne respectivement ; un élément de vanne primaire (30.6) et un élément de vanne secondaire (30.4).

5. Un ensemble de thermostat (10) selon la revendication 1 ou 4, et **caractérisé par** ; afin d'empêcher les fuites de l'agent de refroidissement de l'entrée du radiateur (Ri) vers l'espace intérieur du thermostat à la position entièrement fermée du thermostat en fusionnant l'élément de vanne primaire (30.6) mentionné avec la fenêtre d'entrée du radiateur (Ri), la structure de vanne (30) a une structure de rainure d'étanchéité (30.1) formée à travers ledit élément de vanne primaire (30.6) pour que l'élément d'étanchéité (40) mentionné repose dessus.

6. Un ensemble de thermostat (10) selon la revendication 5, et **caractérisé par** ; afin d'aider le thermo-actionneur (50) mentionné à être fixé dans la structure de vanne (30), la structure de vanne (30) a des bras de vanne (30.3) qui s'étendant entre l'élément de vanne primaire (30.6) et l'élément de vanne secondaire (30.4) ont une distance progressivement décroissante l'un à l'autre vers la vanne secondaire (30.4).

7. Un ensemble de thermostat (10) selon la revendication 1 ou 6, et **caractérisé par** ; afin d'empêcher l'effondrement de la structure de vanne (30) pendant le cyclage du l'agent de refroidissement en guidant la structure de vanne (30) dans le cadre de montage (11), la structure de vanne (30) a un arbre de centrage (30.5) s'étendant vers le trou de guidage du cadre de montage (11) en tant que prolongement de l'élément de vanne secondaire (30.4).

8. Un ensemble de thermostat (10) selon la revendication 7, dans lequel afin de stocker l'énergie de mouvement de la structure de vanne (30) en tant qu'énergie potentielle pour aider le mouvement vers l'arrière de la structure de vanne (30) pendant le processus de passage de la position de thermostat entièrement ouverte à la position de thermostat entièrement fermée, le ressort (20) mentionné est inséré entre l'élément de vanne primaire (30.6) de la structure de vanne (30) et le cadre de montage (11).

9. Un ensemble de thermostat (10) selon la revendication 8, et **caractérisé par** ; afin d'empêcher un mouvement supplémentaire du ressort (20) vers l'entrée de dérivation (Bi) et ainsi permettre audit ressort (20) de stocker de l'énergie potentielle, le cadre de montage (11) comporte une structure de pièce d'arrêt de ressort (11.1).

10. Un ensemble de thermostat (10) selon la revendication 9, et **caractérisé par** ; afin de permettre à l'agent de refroidissement de s'écouler plus doucement (sans chute de pression soudaine) de l'entrée de dérivation (Bi) à la sortie (O) à travers le circuit de dérivation et également d'utiliser moins de matériau, la structure de pièce d'arrêt de ressort (11.1) mentionnée sur le cadre de montage (11) a une géométrie ayant pente progressivement augmentée vers le ressort (20) sans saillie pointue.

11. Un ensemble de thermostat (10) selon la revendication 1 ou 10, et **caractérisé par** ; afin de fournir une opération de montage irréversible entre le cadre de montage (11) et la structure de vanne (30), le cadre de montage (11) a des structures de griffes de cadre interne (11.2) qui présentent une propriété flexible au premier montage en s'étirant vers l'arrière puis en revenant dans la même position lorsque l'élément de vanne secondaire (30.4) et les bras de vanne (30.3) sont situés à l'intérieur du cadre de montage (11).

12. Un ensemble de thermostat (10) selon la revendication 1 ou 8, et **caractérisé par** ; afin d'empêcher l'effondrement de la structure de vanne (30) pendant le cycle de l'agent de refroidissement en guidant l'arbre de centrage (30.5) mentionné partout, le cadre de montage (11) a des structures d'élément de guidage (11.3).
